Europäisches Patentamt

European Patent Office

Office européen des brevets

(11) Publication number: **0 020 194**
A1

# EUROPEAN PATENT APPLICATION

(21) Application number: **80400512.2**

(22) Date of filing: **16.04.80**

(51) Int. Cl.³: **G 01 L 9/12**, G 01 L 19/14

(30) Priority: **16.04.79 US 30587**

(43) Date of publication of application: **10.12.80**
**Bulletin 80/25**

(84) Designated Contracting States: **DE FR GB IT**

(71) Applicant: **THE BENDIX CORPORATION, Executive Offices Bendix Center, Southfield, Michigan 48037 (US)**

(72) Inventor: **Brooks, Mark Allen, 8320 Canal Road, Sterling Heights, MI. 48087 (US)**
Inventor: **Fallis, Robert Edward, 975 Hickory Ridge Circle, Milford, MI. 48042 (US)**
Inventor: **Lee, Chen Yi, 2862 Bordon Drive, Troy, MI. 480B84 (US)**
Inventor: **Wu, Charles Tung-ming, 2497 Wexford Avenue, Troy, MI. 48084 (US)**

(74) Representative: **Bruilé, Jean et al, Service Brevets Bendix 44, rue François 1er, F-75008 Paris (FR)**

(54) **Pressure sensing structure using a capacitance pressure capsule.**

(57)   A pressure sensor including a pressure capsule (100) such as a dual diaphragm quartz capacitance pressure capsule and structure (24, 36, 62, 64) for supporting and sealing same within the pressure environment to be measured. The pressure capsule having two parallel quartz plates (102, 104) spaced by a dielectric ring forming a vacuum chamber therein. The structure providing a force balanced support for compressively loading the pressure capsule through the dielectric ring. The structure further having transfer port (78a, b, c) therein to communicate the pressure environment to both plates.

EP 0 020 194 A1

IMPROVED PRESSURE SENSOR

The invention relates to an improved pressure sensor. More particularly, the invention relates to a pressure sensor having a capacitance type pressure capsule and a housing for supporting the pressure capsule.

The incorporation of pressure sensors into the electronic control systems of automotive vehicles poses severe operational requirements for the pressure sensor. These requirements are further heightened when the pressure sensor is used to measure the manifold pressure (MP) or the manifold absolute pressure (MAP) of the engine.

The pressure sensor must operate in a mobile and severely hostile environment which may include any of the following characteristics : varied temperature extremes, excessive shock and vibration and high levels of electromagnetic interference and corrosive gases and liquids. The pressure proximate the intake manifold is rapidly changeable and susceptible to large variations in magnitude (1-4 atmospheres) which may be caused as the result of explosive backfire or may occur during the boost phase of the operation of an engine equipped with a supercharger or turbocharger ; thus requiring a pressure sensor having a large dynamic range and high sensitivity.

The invention proposes an improved pressure sensor, characterized in that it comprises a pressure capsule means for generating a signal indicative of the pressure of the environment applied thereto, having parallely situated and separated first and second pressure receiving surfaces, each surface having a pressure responsive region thereon which deflects in response to said pressure of the environment to be sensed, housing means for enclosing said pressure capsule within a pressure receiving cavity located therein, said housing means having port means in fluid communication between said environment and said pressure receiving cavity for communicating said pressure thereto, support means located within said pressure receiving cavity interposing said housing and said first and said second pressure receiving surfaces for suspending said capsule about the periphery of said pressure responsive regions, transfer port means located within said housing means for communicating said environment to be sensed to both of said pressure responsive regions, signal conditioning means electrically connected to said pressure capsule means responsive to said signal for generating an output signal indicative of the magnitude of said pressure.

In response to an applied pressure, both surfaces act as cantilevered plates, and deflect towards each other and bend over the raised dielectric ring varying the capacitance between the plates.

An advantage is accomplished by the circumferential seal and support provided by the housing and O-rings which virtually floats the pressure capsule within the pressure environment to be measured. By using a resilient seal and support the pressure capsule is effectively isolated from shock and vibration.

A further feature of the present invention is achieved by the orientation of the metallic housing to the capsule electrical components thereby effectively shielding the pressure capsule from stray interference signals as well as preventing electrical signals from radiating from the housing and pressure capsule.

An additional feature is the use of flat quartz plates which uniformly deform about the dielectric ring enhancing the linearity of the output signal and further eliminates the need for the hollowed or etched cavities in deformable members shown in the prior art.

The invention will now be described with reference to the accompanying drawings wherein :

Figure 1 is an exploded view of a preferred embodiment of a pressure sensor according to the present invention ;

Figure 2 is an axial sectional view of the pressure sensor of Figure 1 ;

Figure 3 is a sectional view through section 3-3 of Figure 2 with portions of the pressure sensor removed ;

Figure 4 is a sectional view taken through section 4-4 of Figure 2 with housing 22 removed ;

Figure 5 is a partial sectional view through section 5-5 of Figure 4 ;

Figure 6 is a sectional view of the pressure capsule ;

Figure 7 is a bottom view of the upper disc of the pressure capsule taken through section 7-7 of Figure 6 ;

Figure 8 is a top view of the lower disc of the pressure capsule taken through section 8-8 of Figure 6 ;

Figure 9 illustrates an alternate embodiment of the pressure capsule ; and

Figure 10 illustrates a sectional view taken through section 10-10 of Figure 9.

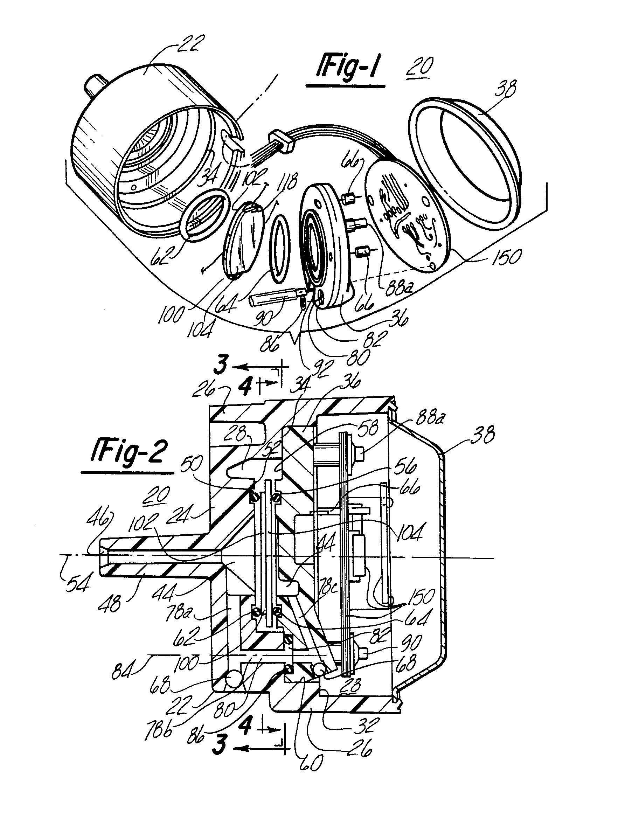

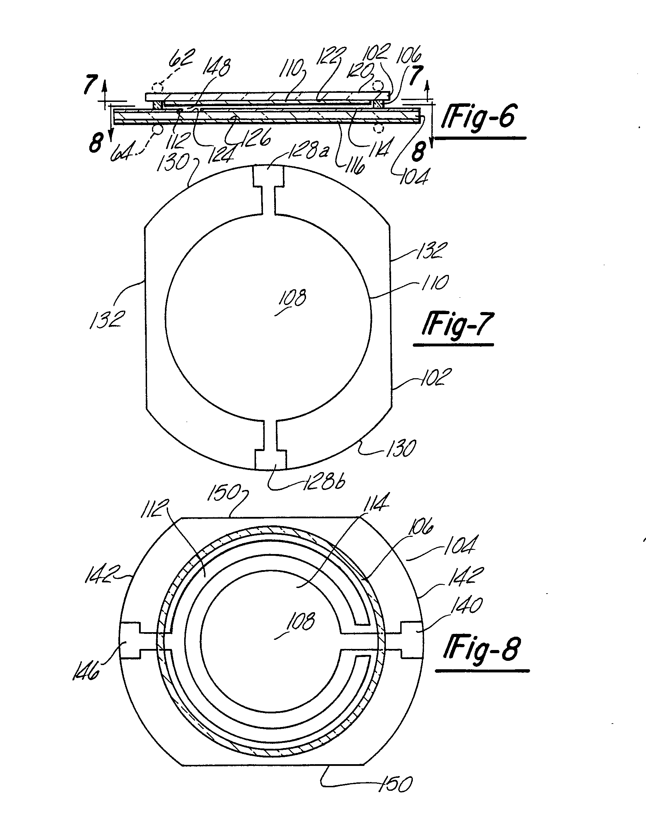

Reference is made to Figure 1, which is an exploded view of a preferred embodiment of a capacitive pressure sensor 20. In particular, Figure 1 illustrates the interrelationship of the primary components of the present invention. There is shown a cup-like housing 22, a base 36 and cover 38. The housing 22 and base 36 combine to protect, support and enclose a pressure capsule 100 which is suspended therebetween by a pair of O-rings 62 and 64. The base 36 is designed to seat against a circumferential shoulder 34 within the housing 22. The signal conditioning electronics 150 are suspended between the base 36 and cover 38 by three pedestals. Two of these pedestals 88a and b (see Figure 5) are integral parts of the base 36. The third pedestal is an electrically conductive post 90 which projects from the housing 22 and extends through a centering groove 92 in the base 36 providing the third leg of the three legged support for the signal conditioning electronics 150. Signal communication with the electronics 150 is through a plurality of pins 66 in the base 36. As will be discussed later, post 90, in addition to supporting the electronics, provides an improved electrical ground connection linking the housing 22, base 36 and electronics 150. In the preferred embodiment, the housing 22 is fabricated of an electrically conductive material such as aluminum, or carbonized plastic which cooperates with the components of the pressure capsule 100 to isolate pressure measurements from stray electric fields. The base 36 may similarly be fabricated of metal or alternatively of a non-conductive material such as a thermo-set plastic or carbonized plastic having the required number of electrical pins 66 extending therethrough. These and other features of the present invention will be discussed in more detail in the accompanying figures.

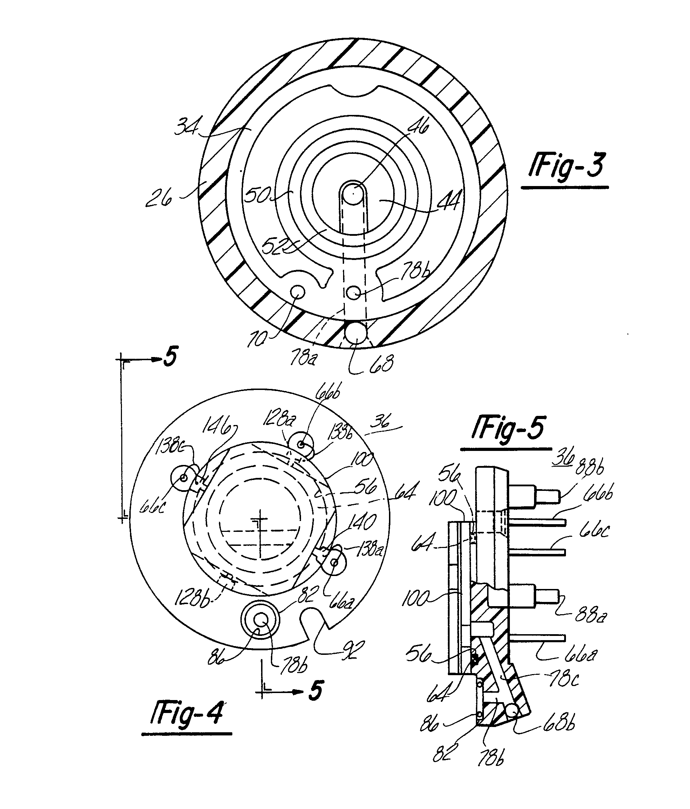

Figure 2 is a sectional view of the assembled pressure sensor 20, further illustrating the relationship between the housing 22, base 36, pressure capsule 100 and its associated signal conditioning electronics 150. The housing 22 includes a bottom 24 and a walled portion 26 protruding therefrom defining a cup-like cavity 28. The housing 22 has two circumferential shoulders 32, 34 surrounding the cavity 28, located on the interior portion of the cylindrical wall 26 and spaced from the bottom 24 of the housing 22. The shoulder 34 provides a means for circumferentially supporting the base 36. The base 36 is a disc-like member comporting to the substantially circular dimensions of the interior of wall 26 and to the dimensions of the circumferential shoulder 34. The exterior dimensions of the base 36 may be chosen to provide for a press fit engagement between the interior of the wall 26 and the base 36 or may be sized to be staked in place at the base 36 - shoulder 32 interface (staking not shown). When the base 36 is mounted within the housing 22, it is spaced from the bottom 24 forming a pressure receiving cavity 44 therebetween. The pressure receiving cavity 44 is the innermost portion of the cup-like cavity 28. The pressure receiving cavity 44 is vented to an external working pressure through an input passage 46 located within the bottom 24 of the housing. As illustrated, the input passage 46 is located within a pressure received port 48 which protrudes from the bottom 24 of the housing 22.

The housing 22 and base 36 cooperate to support the pressure capsule 100 within the pressure receiving cavity 44. The housing 22 is fabricated with a circular groove 50 formed in a surface 52 of the bottom 24 adjacent to the pressure receiving cavity 44. In the embodiment shown in Figure 2, the groove 50 is coaxial to an axis 54 which runs through the center of the input passage 46. In addition, the base 36 is fabricated with a similar groove 56 which is located on a surface 58 of the base 36 adjacent to the pressure receiving cavity 44. In the assembled state with the base 36 seated upon the shoulder 34, the second groove 56 will be located coaxial to axis 54 and immediately below but spaced apart from groove 50. The significance of this spacing will be discussed later. It is a requirement of the invention that grooves 50 and 56 be in registration with one another, thus necessitating a means of aligning both grooves. This is done in the preferred embodiment in a straight forward manner and is accomplished by controlling the tolerances between the base 36 and the interior of the wall 26, i.e. shoulders 32 and 34. The groove 56 is formed in the base 36 concentric to its edge 60 therein permitting the required accuracies upon assembly. The coacting set of grooves 50 and 56 are sized to accept identical pairs of O-rings 62 and 64 for supporting the pressure capsule 100. It can be seen that by requiring the alignment of the grooves 50 and 56 the clamping or compressive force exerted on the pressure capsule 100 will be directed substantially through the centers of the grooves 50 and 56. The degree of compressive force exerted on the pressure capsule 100 is determined by the spacing between the parallel surfaces 52 and 58. The O-rings 62 and 64 in cooperation with the base 36 and housing 22 provide a means for resiliently supporting the pressure capsule 100, and means for force balancing the pressure capsule 100 wherein equal and opposite compressive forces are imparted to opposing surfaces of the pressure capsule 100. The O-rings 62, 64 also provide a pressure tight seal for the pressure receiving cavity 44 which is exposed to the working pressure environment, therein isolating it from the remaining portions of the cup-like cavity 28. The isolation of the pressure receiving cavity 44 has further significance in the following context. As will be described later, the pressure capsule 100 is a capacitive pressure capsule comprising two parallel quartz plates 102, 104 (see Figure 6) having a plurality of electrodes 110, 112, 114 imprinted thereon. Electrical communications between the signal conditioning electronics 150 and the pressure capsule 100 are through a plurality of electrical contacts 128, 146 which are located about the periphery of the pressure capsule 100. Thus, as shown, the O-rings 62, 64 isolate these electrical contacts from the working pressure environment. This is quite significant as can be seen by the following : One use of the present invention is to measure the absolute pressure in the intake manifold of an internal combustion engine. In this context corrosive gases will be input into the pressure receiving port 48. In addition, if the engine has a turbo or supercharger, there·may be intervals during the operation of the engine wherein raw fuel will be input into the pressure receiving port 48, therein further illustrating the need to isolate the electrical contacts from the pressure receiving cavity 44. Electrical communication between the electrical contacts 128, 146 of the pressure capsule 100 and its associated pressure sensor electronics 150 is through a plurality of electrically conductive pins 66 which are imbedded in and extend through the base 36. Additional sealing between the base 36 and housing 22 and protection for the electronics 150 can be achieved by filling that portion of the cavity 28 which houses the electronics 150 (between the base 36 and cover 38) with a sealing material such as Humiseal manufactured by Columbia-Chase, Woodside, New York.

As previously discussed, the present invention directs the working pressure environment to both surfaces of the pressure capsule 100. This is accomplished by providing the base 36 and bottom 24 with a plurality of intersecting passages 78a, b, c which together comprise a transfer port 80 for transferring the working environment to both pressure receiving surfaces of the pressure capsule 100. Inasmuch as the pressure within the transfer port 80 will be that of the working pressure environment it is necessary to provide a pressure tight seal about that portion of the transfer port 80 at the juncture of the base 36 and shoulder 34. This is accomplished by providing the base 36 with a groove 82, coaxial to a center line 84 through the passage 78b, which is sized to accept an O-ring 86. In this manner upon assembly, the base 36 will compress the O-ring 86 against the shoulder 34 of the housing 22 therein providing a pressure tight seal of the transfer port 80. Similarly, passages 78a and 78c must also be sealed. The required pressure tight seal can be accomplished by welding, sealing or epoxying at locations 68 at the ends of the respective passages 78a and 78c.

Reference is now made to Figure 3 which is a sectional view taken through section 3 of Figure 2 with the base 36, pressure capsule 100 and O-ring 62 removed. The post 90 has also been omitted to show the post receiving hole 70 more clearly. Figure 3 further illustrates the location of the transfer port 80 formed by passage 78b.

Reference is made to Figure 4 which is a sectional view taken through section 4-4 of Figure 2 with the housing 22 removed and further illustrates the mounting relationship between the pressure capsule 100 and the base 36. A detailed description of the pressure capsule 100 can be found in the discussion of Figures 6 through 8. It is sufficient for discussion of Figure 4 to visualize the pressure capsule 100 as a substantially circular structure which is coaxially mounted relative to the center of base 36 and axis 54 of the housing 22. Figure 4 also illustrates the relationship between the electrical contacts 128, 140, 146 of the pressure capsule 100 and the plurality of electrical pins 66 extending through the base 36. The contacts 128, 140, and 146 are connected to pins 66a, b, and c through a plurality of electrical leads 138a, b, and c. The top view of the base permits easy recognition of a portion of the transfer port 80, in particular, passage 78b, with its coacting pressure tight seal, i.e. O-ring 86, located within groove 82. In addition, the alignment slot 92, the relationship of groove 56 to its coacting O-ring 64 and to the geometries of the pressure capsule 100 are readily discernable.

Figure 5 is a side view of the base 36 with the electronics 150 removed and also contains a partial sectional view illustrating the details of the transfer port 80. Figure 5 more clearly illustrates the relationship of the pedestals 88a and b and the relationship of pins 66a through 66c to the other components of the base.

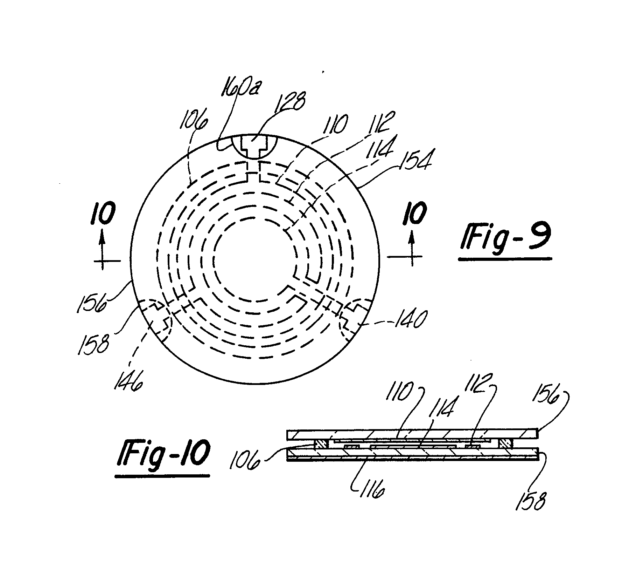

Figures 6, 7 and 8 illustrate the details of the pressure capsule 100. The pressure capsule 100 comprises a dual diaphragm having two coaxially oriented oblong non-conductive flexible plates or discs which are preferably fabricated from fused quartz. As will be described later, each plate or disc of the assembled capsule 100 is rotated relative to one another about their common centers 108. The pressure capsule 100 consists of an upper plate or disc 102 and a lower plate or disc 104. Each disc is maintained in spaced relationship one to the other by a dielectric material such as a frit glass 106. The upper and lower discs 102 and 104 have the same physical shape and differ by the electrodes 110, 112, 114 and a ground shield 116 imprinted thereon. In the preferred embodiment, as illustrated in Figures 6-8 each quartz disc is a substantially circular member having flattened sides giving it a substantially oblong appearance. The flattened sides 132 and 150 may be viewed as cut-outs and provide a reference for alignment and for registration permitting the accurate placement of the electrodes and dielectric material thereon. The flattened sides 132, 150 or cut-outs also provides easy access to a plurality of electrical contacts 128, 140 and 146. In addition, the sides 132 and 150 or cut-outs in cooperation with a registration fixture 175, discussed in Figures 9, 10 and 11, provide a means for aligning the plates or discs 102 and 104 at a determinable orientation relative to each other prior to and during fabrication. Other plate shapes and cut-outs may be substituted in comformity with the teachings herein. The upper quartz disc 102 has an upper surface 120 and a parallel lower surface 122. In a similar manner, the lower quartz disc 104 has an upper surface 124 and a parallel lower surface 126. A substantially circular ground electrode 122 having two oppositely extending electrical contacts 128a and b is disposed on the lower surface 102. These electrical contacts extend across the larger dimension of disc 102 to its edge 130, as shown in Figure 7.

Reference is made to Figure 8 which illustrates the details of the lower quartz disc 104. The lower quartz disc 104 has a circular electrode 114 disposed on its upper surface which is electrically connected to its associated electrical contact 140. The electrical contact 140 is located on the circular or peripheral edge 142 of the lower quartz disc 104. In addition, the upper surface 124 contains a substantially circular ring or c-shaped electrode 112 which partially surrounds the smaller electrode 114. The c-shaped electrode 112 is in electrical communication with an associated contact 146 located at the periphery of the lower disc 104 and is oppositely situated relative to contact 140. Further inspection of Figure 8 reveals the c-shaped outer electrode 112 is concentricly disposed relative to the inner electrode 114 and to electrode 110. The electrode combination 110-114 shall be designated as a pressure sensing capacitor $C_p$ while the electrode combination 110-112 shall be designated as the reference capacitor $C_r$. The diameter of the ground electrode 110 should be chosen equal to or greater than the diameter of the outer electrode 112. In the preferred embodiment, the ground electrode 110 has a diameter which is ten percent larger than the diameter of the outer electrode 112 and the areas of electrodes 112 and 114 are made equal yielding capacitances $C_p$ and $C_r$ which are substantially equal. The purpose of requiring the ground electrode 110 to be equal to or slightly greater than the diameter of the outer electrode 112 is to prevent the introduction of stray capacitance into the electrical measurements providing a degree of electromagnetic isolation for the pressure capsule 100. It can be seen that the capacitive capsule 100 is effectively shielded from electromagnetic radiation by the combined shielding effects of the ground electrode 110 and ground shield 116. In addition, the ground electrode 110 and ground shield 116 may be connected together by using a wire such as ground link 118 therein insuring that the ground electrode 110 and ground shield 116 remain at the same electric voltage potential.

Figure 8 further illustrates the relationship between the dielectric frit glass 106 and the electrodes 110, 112 and 114. In particular, the frit glass 106 which spaces the two discs apart from one another is a circular ring and has a diameter greater than either of the diameters of electrodes 110, 112. In addition, the dielectric frit glass 106 forms a pressure tight seal for the interior chamber 148 therebetween. If the pressure capsule is to function as an absolute pressure sensing apparatus the interior chamber 148 must be evacuated. The degree of vacuum within the interior chamber 148 will depend upon the low range of the desired pressure sensitivity. Under certain circumstances, it might even be desirable to back fill the interior chamber 148 to a predetermined pressure or with an inert gas to achieve a degree of temperature compensation. Reference is again made to Figure 6 which illustrates by use of phantom lines the relationship between O-rings 62 and 64 and the circular ring of frit glass 106. To achieve a forced balanced situation, it is required that the compressive forces exerted on the pressure capsule 100 by O-rings 62 and 64 be circumferentially applied directly above and below the frit glass 106.

Further inspection of Figures 6-8 reveal a unique technique, not limited to a capacitive capsule, of arranging the plurality of electrical contacts needed to communicate with the pressure capsule 100. Inasmuch as each quartz plate or disc 102, 104 has an oblong shape it is desirable to place the electrodes on the appropriate quartz disc at the dimensions of maximum distance from the center of each plate or disc. By rotating quartz plate 104, a determinable amount such a determinable amount such as 90° relative to quartz disc 102 it is apparent that the electrodes, which are located at the maximum distances from the center of each of the respective discs, will extend beyond the smaller dimensions of the substantially oblong discs. As previously mentioned, the preferred embodiment uses a substantially circular quartz disc having flattened sides, i.e. sides 132, 150, permitting the electrodes to extend beyond these flat areas for easy access.

The upper surface 120 of the upper quartz disc 102 and the ground shield 116 or the lower surface 126 of the lower disc 104 can be thought of as two pressure receiving surfaces and the areas of these pressure receiving surfaces interior to the diameter of the glass frit 106 may further be described as pressure responsive regions. The capacitive plates or discs 102, 104 will tend to deflect upon the application of the normal component of the pressure force being sensed at points interior to the support provided by the glass frit 106. A pressure capsule 100 having two pressure responsive regions yields a sensor having increased sensitivity when compared to a sensor employing a single pressure sensitive surface, that is, the use of two pressure responsive surfaces permits the use of a smaller pressure capsule 100 to achieve the same change capacitance output in comparison to a pressure sensor employing a single pressure responsive surface.

The deflections of the discs 102, 104 will cause a determinable change in the capacitance of the pressure capsule. Techniques for measuring this capacitance or change in capacitance are known in the art. One such scheme is shown by W.R. Polye in U.S. Patent No. 3 858 097, which issued December 31, 1974, while another is taught by C.Y. Lee in his commonly assigned United States Patent Application Ser. No. 965 453, filed November 30, 1978, both of which are expressly incorporated by reference.

Reference is now made to Figure 9 and 10 which illustrates an alternate embodiment of the pressure capsule 100. In particular, there is shown a circular pressure capsule 154 having a circular upper plate or disc 156 and circular lower plate or disc 158. The arrangement of the electrodes 110, 112, and 114 thereon remains as previously described in the preferred embodiment. However, the electrical contacts 140 and 146 are no longer oppositely situated but rather skew oriented relative to one another ; the circular ground electrode 110 is in electrical communication with only one electrical contact 128 which is uniformly positioned between contacts 140 and 146. In addition, the upper plate or disc 156 contains a single cut-out 160a while the lower plate or disc 158 contains a plurality of cut-outs such as cut-outs 160b and c. Each cut-out 160a-c is located on its respective disc to expose an oppositely situated electrical contact 128, 140 or 146 located and the opposing disc.

10

## CLAIMS

1. An improved pressure sensor, characterized in that it comprises a pressure capsule means (100) for generating a signal indicative of the pressure of the environment applied thereto, having parallely situated and separated first and second pressure receiving surfaces (102, 104), each surface having a pressure responsive region thereon which deflects in response to said pressure of the environment to be sensed, housing means (22, 36, 38) for enclosing said pressure capsule within a pressure receiving cavity (44) located therein, said housing means having port means (46) in fluid communication between said environment and said pressure receiving cavity for communicating said pressure thereto, support means (24, 36, 62, 64) located within said pressure receiving cavity interposing said housing and said first and said second pressure receiving surfaces for suspending said capsule about the periphery of said pressure responsive regions, transfer port means (78a, 78b, 78c) located within said housing means for communicating said environment to be sensed to both of said pressure responsive regions, signal conditioning means (150) electrically connected to said pressure capsule means responsive to said signal for generating an output signal indicative of the magnitude of said pressure.

2. An improved pressure sensor according to claim 1, characterized in that it further includes sealing means (62, 64) located about the periphery of both said pressure responsive regions (102, 104) for developing a pressure tight seal between said pressure capsule means (100) and said housing means (22, 36, 38).

3. An improved pressure sensor according to claim 2, characterized in that said support means includes said sealing means.

4. An improved pressure sensor according to claim 3, characterized in that said pressure capsule means (100) further includes a plurality of electrical contacts (128, 146) located at dimensions outside the periphery of said pressure responsive regions, wherein said contacts are electrically connected to said signal conditioning means (150).

5. An improved pressure sensor according to claim 4, characterized in that said pressure capsule means (100) is of the capacitive type and said signal indicative of said pressure is a capacitance signal.

6. An improved pressure sensor according to claim 3, characterized in that said support means includes a first resilient support (62) circumferentially located about the periphery of said pressure responsive region of said first pressure receiving surface (102) interposing said housing (22) and said capsule (100), and a second resilient support (64) circumferentially

11

located about the periphery of said pressure responsive region of said second pressure recieving surface (104) interposing said housing (36) and said capsule (100).

7. An improved pressure sensor according to claim 6, characterized in that said first and said second support means are O-rings (62, 64).

8. An improved pressure sensor according to claim 7, characterized in that said first and said second pressure responsive regions are circular and aligned relative to the other.

Fig-1  20

Fig-2

*Fig-3*

*Fig-4*

*Fig-5*

Fig-6

Fig-7

Fig-8

_Fig-9_

_Fig-10_

0020194

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | |
| X | FR - A - 2 373 785 (BUNKER RAMO CORP.) <br> * Page 4, line 30 to page 10; figures * <br> -- | 1-8 | G 01 L 9/12 <br> 19/14 |
| X | FR - A - 2 354 549 ( BUNKER RAMO CORP.) <br> * Page 5, line 20 to page 10, line 25; figures * <br> ---- | 1-8 | |

**TECHNICAL FIELDS SEARCHED (Int.Cl. ³)**

G 01 L 9/00
9/12
13/02
13/06
23/12
19/14
7/10

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 18-07-1980 | VAN ASSCHE |

EPO Form 1503.1  06.78